# EUROPEAN PATENT SPECIFICATION

(11) **EP 0 464 025 B1**
(45) Date of publication and mention of the grant of the patent: **06.03.1996**
(21) Application number: 89912778.1
(22) Date of filing: 30.10.1989
(51) Int. Cl.: H04N 5/445

(54) **TV DATA CAPTURE DEVICE**
FERNSEHDATENERFASSUNGSGERÄT
UNITE DE SAISIE DE DONNEES DE TELEVISION

(43) Date of publication of application: 08.01.1992
(73) Proprietor: YEE, Keen Yoke, White Plains, NY 10605 (US)
(72) Inventor: YEE, Keen Yoke, White Plains, NY 10605 (US)
(74) Representative: Petersen, Richard Courtenay
(86) International application number: PCT/US89/04852
(87) International publication number: WO 91/06912

(56) References cited:
- WO-A-86/01359
- WO-A-91/05436
- GB-A- 2 107 159
- GB-A- 2 217 144
- US-A- 4 367 548
- US-A- 4 367 557
- US-A- 4 395 780
- US-A- 4 695 880
- US-A- 4 734 764
- US-A- 4 803 551

## Description

This invention relates to digital data capture apparatus used by a receiving party and operating in combination with a receiving TV set or monitor for receiving a broadcast composite signal, which allows the capture and display of digital data sent with video signals.

It is well known that many services are provided which enable users to display on screen digital data provided to subscribers. For example, subscribers can receive services related to business and stock market quotations, where stock market prices are transmitted over telephone lines and are received by a modem at the subscriber's terminal. Having a computer and keyboard entry device enables the subscriber selectively to access digital data which is sent over the telephone lines, in order to display this data on a computer screen.

Many services of the kind described are available, but the expense of such a service is not trivial. Also, the subscriber usually has to have a computer and a modem in order to participate fully in the range of services offered to subscribers.

Many TV channels transmit programmes including digital data for the purpose of close-captioning. The digital data is transmitted with the video signals and is stored in the vertical blanking interval (VBI). This data can be extracted using a decoder which re-integrates the translated digital data into a regular video signal that can be displayed on the TV screen. This displays the captions on the screen simultaneously with the video picture.

In more detail, an existing system is a teletext system authorised by the Federal Communications Commission in lines 10 to 18 of the transmission band. Teletext is a one-way data transmission system that is sent out as part of a TV signal, whether the signal is sent out via satellite cable, or regular broadcast TV. This teletext information is available free of charge to viewers, in contrast to the digital data sent to subscribers to the various services of the kind mentioned hereinbefore. There are many types of teletext services being offered at this time covering topics such as cultural affairs, home and catalogue shopping, sports, news, financial information, weather and other types of statistics. Such teletext information is regularly offered by major TV networks.

As noted, teletext text and graphics are transmitted as digital data squeezed into a broadcast TV signal in the VBI. This interval is the time at the end of each TV field when the cathode-ray beam is cut off while it returns to start the next field. The VBI is also used for the transmission of information other than teletext information. Such other uses include close-captioned information, automatic colour-balance information and broadcast test data. Teletext information is sent as an endless loop of pages where the data for the pages are transmitted serially at the rate of 13,500 bits per second per VBI line used. The total rate of transmission is dependent upon the number of lines (up to 8) used to transmit the data.

At the user end, a decoder is used to convert the teletext data into a regular video signal that can be displayed on a TV screen. Any of the pages in the loop can be accessed at random. However, because an endless-loop format is used, it takes time for each page to come around in the loop. This means that there is a slight delay between the time the page number is entered and the time when the page actually appears on the screen. In turn, this imposes a practical limit on the number of pages that a teletext service can offer. To alleviate this delay, more important pages of information may be transmitted more than once within the endless loop, so that these pages come up faster. For example, indexes are transmitted several times in the loop, as these pages are more important to users.

When using teletext services, it is not possible to access any page of information without the attendant delay in being able to extract and display the digital information. Further there is no provision for permanently storing a page of information that is interesting to the user. Rather, the endless loop of information is continuously updated and is often changed, so that a desired page is no longer part of the loop of information transmitted. As the presently available teletext decoders are rather expensive and further as the ease of extracting information is limited, such systems have not found great popularity. On the other hand, the on-line services, whilst solving many of the teletext service problems, require expensive equipment and have high subscription rates.

Accordingly, it is an object of the present invention, to provide an inexpensive apparatus for use with conventional TV sets enabling the ready extraction, storage and retrieval for display on a TV screen of digital data sent along with video signals, where the restrictions of an endless-loop format are overcome.

It is another object of this invention to provide apparatus in which the updating of the digital data does not preclude the display on the TV screen of digital data which is no longer being transmitted.

It is yet another object of the invention to provide a system enabling expanded use of a conventional TV set whereby digital data sent with the TV signal can be selectively accessed and displayed on the TV screen.

In WO-A-86 01359, there is disclosed a teletext system in which digital information is extracted from an incoming broadcast signal, where the digital information is presented in an endless loop format. An extraction circuit receives instruction from a microprocessor and extracts an item of data during a scan of the incoming signal. Thereafter, the microprocessor issues another command to extract additional data. Thus, in general, only a single item of interest is extracted during each scan of the endless loop.

GB-A-2 217 144 discloses apparatus for superimposing a teletext picture on a TV picture. Teletext data stored in a video RAM is compressed into data adapted for display which is part of a TV screen. The compressed teletext data is passed to a synthesizing circuit, together with display switching signal, so that the synthesizing circuit selectively supplies the broadcast video signal and the compressed teletext data to a video output circuit, enabling the teletext picture to be displayed on part of the screen superimposed on the TV picture.

According to the invention, digital data capture apparatus used by a receiving party and operating in combination with a receiving TV set or monitor, including receiving means associated with the TV set or monitor for receiving a broadcast composite signal including digital data, extraction means enabling the receiving party to extract digital data from the broadcast composite signal, a microprocessor for controlling the extraction of digital data from the broadcast composite signal, a converter for converting extracted digital data into video signals suitable for display on the screen of the TV set or monitor, and input means for enabling the receiving party to interface with the microprocessor, is characterised by further means enabling the receiving party to capture for display on the TV set or monitor digital information corresponding to a plurality of unrelated subject matter topics having no predetermined order or common element, where the digital data corresponding to the plurality of unrelated topics does not require repetition of information transmission and can be extracted in a single scan of the information in the broadcast composite signal and can be permanently stored, the further means including means for arbitrarily selecting digital data corresponding to the plurality of unrelated subject matter topics selected by the receiving party, means in the extraction means for extracting digital data from the broadcast composite signal corresponding to a randomly ordered plurality of arbitrarily selected subject matter topics during a single scan of the broadcast composite signal, means for permanently storing the extracted digital data for a length of time determined by the receiving party, and memory means communicating with the microprocessor and storing programs therefor, whereby operation of the microprocessor requires no computer knowledge or programming by the receiving party.

The digital data capture apparatus can be incorporated within a conventional TV set or monitor, or can be a separate component linked to the TV set or monitor by co-axial cabling. The apparatus enables the extraction, storage and retrieval of digital data from a composite signal including both digital data and video data, where the digital data can be extracted and displayed on the TV screen or monitor screen.

In an embodiment of the invention, some components are used which are similar to those of a close-captioned decoder or a teletext decoder. The apparatus comprises a digital data extraction circuit which is an integrated circuit and extracts digital data from incoming video signals, a microprocessor which receives the digital data, interprets it and then stores it in permanent storage, a RAM/ROM memory unit to contain the software for processing the extracted digital data, and a digital-to-video converter which transforms the extracted digital data for display on a TV screen or monitor. The amount of memory required in the RAM/ROM component is determined by the sophistication of the software and will vary according to the number of functions that are provided in the data capture apparatus. The permanent storage component may be a diskette or a hard disk, the amount of storage depending upon the quantity of digital data to be stored permanently.

A remote control device, such as a keyboard, may be connected to the microprocessor to serve as an input device for communicating with the digital data capture device in order to instruct it to capture and store or to retrieve the stored information. Such a remote control keyboard may be equipped with alpha-numeric keys to allow for sophisticated retrieval instructions to access the stored database of information. Alternatively, the remote control device may be very simple, for example, the normal TV remote control channel-selecting device, operating with infra-red signals.

An interface unit may be provided to interact with the permanent storage in order to connect the digital data capture device to a personal computer for more sophisticated users.

If the data being transmitted is totally digital, the digital data extractor circuit may be omitted, but preferably provides a bye-pass route directly to the microprocessor if only digital data is being transmitted.

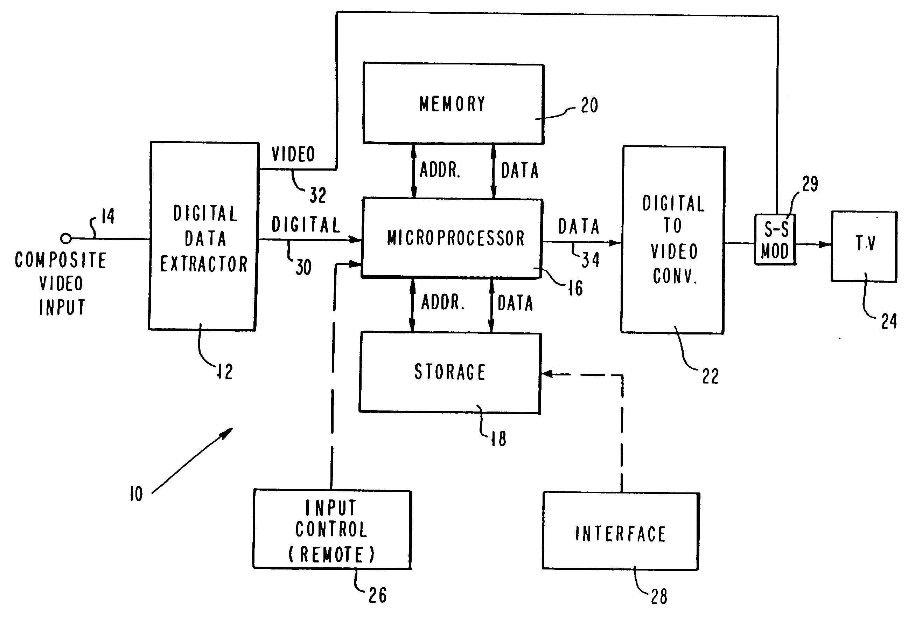

Other aspects of the invention are to be found in the appended claims which define the scope of the invention. How the invention may be carried into effect is hereinafter particularly described and shown in the accompanying drawings in which the sole figure is of a schematic block diagram of a TV digital data capture device in accordance with the present invention, indicating the components of the device and the flow of digital and video signals.

A TV data capture device 10 includes a digital data extractor circuit 12 for extracting digital data from a composite video input appearing on line 14, a microprocessor 16 which receives the digital data, interprets it, and then stores it in permanent storage 18, and a memory circuit 20 including a read only memory (ROM) and a random access memory (RAM) for containing software required to process the extracted digital data. A digital-to-video converter 22 is used to transform extracted digital data for display on a TV screen or monitor 24. A remote control device 26 can be connected to the microprocessor 16 to serve as an input device for instructing the capture and storage, or retrieval of stored digital information. An interface circuit 28 is optionally included for connecting the TV data capture device 10 to an external computer (not shown). A signal switcher and modulator circuit 29 is connected to the extractor circuit 12 and converter 22 to enable both TV pictures (video signals) and extracted digital data to be displayed simultaneously on the TV screen or monitor 24. The circuit 29 may be omitted and the video signals and extracted digital data sent directly to the TV screen or monitor 24, but at different times.

The composite video signal includes both video and digital data. Sources of such a composite signal include a VCR, a component TV tuner, and a satellite TV receiver. Many new TV sets even have composite outputs from the tuner, as well as direct video and audio inputs. With such a TV set, no separate tuner is necessary. In the absence of a source of composite signals, the data capture device 10 can be implemented by tapping appropriate points inside an existing TV set.

In operation, the digital data extractor circuit 12 is activated to extract digital data from the composite video input signal on line 14. The extracted digital data is sent to the microprocessor 16 on line 30, while the video signal is sent directly on line 32 to the signal switcher and modulator circuit 29. The extracted digital data is sent either to permanent storage 18 or to the memory 20. The memory 20 contains the software required to operate the data capture device 10 to allow digital data to be either stored in permanent storage 18 or to be accessed for display on the TV screen or monitor 24. Thus conducting cables are provided for the data addresses and for the data between memory 20 and microprocessor 16, as well as between permanent storage 18 and microprocessor 16. Data retrieved from memory 20 or storage 18 is applied to the digital-to-video converter 22 on line 34. The converter 22 converts the extracted digital signals into video signals for display on the TV screen or monitor 24. This digital data can be displayed on one of the unused TV channels in a full-screen mode. An alternative mode of display would use the signal switcher and modulator circuit 29 which would recombine the retrieved digital data from the converter 22 with the video signals currently being transmitted on line 32, so that the digital data may be displayed on the TV screen or monitor 24 without interrupting the current programme. Digital data retrieved and displayed in this alternative mode may be selectively displayed in as many lines as desired, and will be superimposed onto the screen of the programme currently being transmitted and displayed.

The various components shown in the figure are well known in the art, and are commercially available. The present invention involves the utilisation of these components in a unique way to enable the consumer to expand the use of his or her TV set in a manner to allow digital data to be extracted and selectively stored, retrieved, and displayed on the TV screen. The software for such a purpose is also well known, and is software typically used to store, retrieve, and display data, regardless of the source of that data.

For a more detailed discussion of the type of circuitry, reference is made to an article by J. Daniel Gifford, which appeared in Radio-Electronics, pages 45 to 49, April 1986. The article describes teletext decoders for extracting digital data from a composite video signal, as well as suitable remote control devices and signal switchers and modulators used to enable a TV set to display both TV pictures and teletext data at the same time. Generally, audio and video buffers are also conventionally used to provide signals of the proper level and polarity to the data extractor and output circuitry. These buffers also protect the data extractor against excessive voltages. The audio signal does not have a part in the operation of the digital extractor, but an audio input can be provided so that it can be modulated on the RF output of the circuit used to enable simultaneous display of video signals and digital data selected from permanent storage 18. The audio connection can be made directly from the tuner of the TV set to the display screen or monitor, if the composite video output of the decoder is used.

The remote control device 26 interacts with the microprocessor 16 to provide inputs enabling the selection and display of digital data that is in permanent storage 18. If desired, an unwired (infrared) remote control unit of the type described in the afore-mentioned Gifford article, can be used.

In contrast to conventional teletext decoding systems, the data capture device of the present invention provides means for selectively storing, retrieving, and displaying digital data on a TV screen. This allows the consumer to avoid the problems associated with the endless loop transmission of digital data in a composite video and digital input. It also allows the consumer to store digital data for later use, even though the data is no longer part of the endless loop format for the transmitted data. Further, the consumer does not have to purchase a computing system and pay for the specialised on-line services in order to have more extensive use of the digital data presently being transmitted in the vertical blanking interval of the video signal that is received by his or her TV set.

The data capture device of the present invention can be applied to enhance existing TV networks and on-line information systems, such as the Dow Jones System. Existing TV networks, such as cable shopping and weather stations, can enhance their value and attraction to the consumer by enabling their channels for use by the data capture device according to the present invention. This is a rather inexpensive investment for the TV networks, as they merely have to mix digital data into their video signals. For instance, a cable shopping network could transmit digital data to record the catalogue number of the merchandise they are selling, together with the cost and the repeat airing time of the merchandise. The consumer at the receiving end watching the show can store this information in permanent storage 18, together with several items of interest. At a later time, the consumer may recall the data stored by item, e.g. lamp, clothes, etc, and view and select the items to purchase at his or her convenience. If the consumer requires a second look at the merchandise, he or she can wait for the next showing as indicated on the stored record.

In the case of weather stations (weather information does not suffer from a lack of visual data), the network can again transmit digital data alongside the regular video transmission. The receiving consumer stores the digital information in permanent storage 18 and can then selectively view the weather data accessed by town, region, etc. The type of storage and the data base used are well known in the art, so that any type of classification can be used when storing data.

Similarly, the use of on-line TV guides can also be enhanced. Transmission of digital data will use the Line-21 system in most cases. For on-line information systems such as Dow Jones, the World System Teletext (WST) or the North American Broadcast Teletext (NABTS) formats are more useful transmission modes as a higher baud-rate will be desirable. The effective baud-rate of the Line-21 system is 510 bits per second, which is rather slow but is sufficient when the data sent is to accompany the currently viewed programme. For large volume data transmission, the WST system offers a 5.7 megabaud rate, using lines 10 to 18 of the vertical blanking interval. This contrasts with the former system which uses only line 21 of the interval.

Talk shows, documentaries, and educational programmes that are enabled for data capture can be stored inexpensively for later reference. This is a helpful feature for handicapped individuals such as those whose hearing is impaired.

As noted, existing teletext systems allow random access to information transmitted by requiring the sender repeatedly to transmit the same batch of information, and consequently the endless loop format is used. A teletext decoder locates the page or record requested by the user by scanning the repeating loop of information transmitted, and then displaying the information on the TV screen. This places a physical limitation on the amount of information that the sender can send while still attaining a reasonable response time for the user when the information is selected. This limit is in the region of about 100 to 200 pages of information. In contrast to this, the TV digital capture device of the present invention places no limitation on the amount of information the sender can transmit, and does not require a repetition of information transmission. The only limitation is at the receiving end, and relates to whether or not the user has bought a unit with sufficient memory and storage for storing whatever information the user has selectively captured from the transmission.

The TV digital data capture device of the present invention offers TV stations the capability of selling a much cheaper form of advertising air time. This is equivalent to classified advertising in newspapers, but makes it available to consumers on-line. It also makes possible the computerisation of advertising such as that contained in the yellow pages of telephone directories. If the WST or NABTS format is used for data transmission, even graphical data can be transmitted and displayed using the TV digital data capture device of the present invention.

The various components of the device 10 can be individual circuits connected as shown in a separate box used together with a conventional TV set or monitor, or can be a portion of a personal computer. In this latter arrangement, some of the components of the device 10 are located on an integrated circuit card that uses one of the slots in a personal computer system board. The card would include the extractor circuit 12, the digital-to-video converter 22, the signal switcher and modulator circuit 29, and an input terminal line 14 for receiving the composite video and digital input signal. The microprocessor 16, storage 18 and memory 20 would be those components already present in the PC. The PC keyboard would be used for input of instructions. The extracted digital data can be directly displayed on the PC screen. In this alternative arrangement, the signal switcher and modulator circuit 29 could be eliminated if the video signals are sent directly to the TV screen or monitor while the extracted digital data is displayed on the PC screen. This arrangement can be used by PC users and owners who can take advantage of the PC and explore more sophisticated processing on the extracted digital data.

In contrast to existing subscriber systems, the present system offers many advantages and the capability of economically using both video and digital data. For example, existing systems which may receive both video and digital data require the afore-mentioned endless loop format, while those that do not use this format receive digital data only through an expensive computer link-up operation. Instead of this, the present invention enables both video and digital data to be received and processed without the need for an endless loop format and at low cost.

The device of the present invention is useful to end users, TV manufacturers, computer manufacturers and service suppliers. The end user can use the data capture device (DCD) to improve existing equipment, i.e. to provide a new function using a DCD box or card. The manufacturers can use the DCD to upgrade their products (TVs or computers) to provide this new function, while a service supplier, such as a cable company, can provide DCD service to its existing subscribers.

While the invention has been described and shown with reference to particular embodiments thereof, it will be appreciated that variations may be made without departing from the scope thereof. The invention provides apparatus for capturing and recording teletext or videotext data and for later processing ranging from simple data retrieval to computer programmed processing when the device is attached to a computer. This allows the user selectively to store, retrieve and display any of the digital data transmitted with the video signal, thereby extending the enjoyment and utility of the TV set.

## Claims

1. Digital data capture apparatus used by a receiving party and operating in combination with a receiving TV set or monitor (24), including receiving means (14) associated with the TV set or monitor (24) for receiving a broadcast composite signal including digital data, extraction means (12) enabling the receiving party to extract digital data from the broadcast composite signal, a microprocessor (16) for controlling the extraction of digital data from the broadcast composite signal, a converter (22) for converting extracted digital data into video signals suitable for display on the screen of the TV set or monitor (24), and input means (26) for enabling the receiving party to interface with the microprocessor (16), characterised by further means enabling the receiving party to capture for display on the TV set or monitor (24) digital information corresponding to a plurality of unrelated subject matter topics having no predetermined order or common element, where the digital data corresponding to the plurality of unrelated topics does not require repetition of information transmission and can be extracted in a single scan of the information in the broadcast composite signal and can be permanently stored, the further means including means for arbitrarily selecting digital data corresponding to the plurality of unrelated subject matter topics selected by the receiving party, means in the extraction means (12) for extracting digital data from the broadcast composite signal corresponding to a randomly ordered plurality of arbitrarily selected subject matter topics during a single scan of the broadcast composite signal, permanent storage means (18) for permanently storing the extracted digital data for a length of time determined by the receiving party, and memory means (20) communicating with the microprocessor (16) and storing programs therefor, whereby operation of the microprocessor requires no computer knowledge or programming by the receiving party.

2. Apparatus according to claim 1, wherein the broadcast signal is a composite video-digital signal.

3. Apparatus according to claim 1 or 2, wherein the microprocessor (16) is a dedicated microprocessor requiring no software programming by the receiving party.

4. Apparatus according to claim 3, wherein the input means is a remote control device (26).

5. Apparatus according to claim 3 or 4, wherein the memory means (20) stores digital data extracted from the broadcast signal.

6. Apparatus according to any preceding claim, including a TV set or monitor (24).

7. Apparatus according to claim 6, including a communication link (32) connected to the extraction means (12) for enabling the transmission of video signals from the broadcast composite signal to be continuously displayed on the TV set or monitor.

8. Apparatus according to claim 6 or 7, including means (29) for enabling video signals from the broadcast composite signal and extracted digital data corresponding to a subject matter topic selected by the receiving party to be displayed simultaneously on the TV set or monitor (24).

9. Apparatus according to claim 6, 7 or 8, including a tuner enabling the display of video information on the TV set or monitor (24) from a broadcast channel other than the channel from which the digital data is extracted.

## Patentansprüche

1. Zur Verwendung durch eine empfangsseitige Partei vorgesehene digitale Dateneinfangvorrichtung, die in Kombination mit einem Fernsehempfänger oder Monitor (24) betrieben wird und mit dem Fernsehempfänger oder Monitor verbundene Empfangsmittel (14) aufweist zum Empfang eines gemischten, digitale Daten enthaltenden Sendesignals für Rundfunk- und Fernsehen, die des weiteren aufweist Extraktionsmittel (12), welche die empfangsseitige Partei in die Lage versetzt, digitale Daten aus dem empfangenen gemischten Sendesignal zu extrahieren, einen Mikroprozessor (16) zur Steuerung der Extraktion der digitalen Daten aus dem gemischten Sendesignal, einen Konverter (22) zur Konvertierung der extrahierten digitalen Daten in zur Anzeige auf dem Bildschirm des Fernsehempfängers oder Monitors geeignete Videosignale, und Eingabemittel (26), die als Schnittstelle zwischen der empfangsseitigen Partei und dem Mikroprozessor (16) dienen, gekennzeichnet durch weitere Mittel, die es der empfangsseitigen Partei gestatten, digitale Informationen einzufangen zur Anzeige durch den Fernsehempfänger oder Monitor (24) entsprechend einer Vielzahl nicht miteinander in Beziehung stehender Gegenstände, die weder eine vorgegebene Ordnung noch ein gemeinsames Element enthalten, wobei die der Vielzahl nicht miteinander in Beziehung stehender Gegenstände entsprechenden digitalen Daten keine Wiederholung der Informationsübertragung erfordern und in einer einzelnen Abtastung der Information im gemischten Sendesignal extrahiert und permanent gespeichert werden können, die weiteren Mittel weisen Mittel auf zur willkürlichen Auswahl digitaler Daten entsprechend der Vielzahl nicht miteinander in Beziehung stehender Gegenstände, wie sie durch die empfangsseitige Partei ausgewählt werden, weiterhin gekennzeichnet durch in den Extraktionsmitteln (12) enthaltene Mittel zur Extraktion digitaler Daten aus dem gemischten Sendesignal entsprechend einer beliebig geordneten Vielzahl von willkürlich ausgewählten sachbezogenen Gegenständen während einer einzelnen Abtastung des gemischten Sendesignals, durch Permanentspeichermittel (18) zur permanenten Speicherung der extrahierten digitalen Daten für eine von der empfangsseitigen Partei bestimmten Zeitspanne und durch Speichermittel (16), die mit dem Mikroprozessor (16) verbunden sind und Programme für diesen speichern, wodurch der Betrieb des Mikroprozessors kein Computerwissen oder eine Programmierung durch die empfangsseitige Partei erfordern.

2. Vorrichtung gemäß Anspruch 1, worin das Sendesignal eine kombiniertes Video-Digitalsignal ist.

3. Vorrichtung gemäß Anspruch 1 oder 2, worin der Mikroprozessor (16) ein den genannten Funktionen zugeordneter Mikroprozessor ist, der keine Softwareprogrammierung durch die empfangsseitige Partei erfordert.

4. Vorrichtung gemäß Anspruch 3, worin die Eingabemittel durch eine Fernsteuereinrichtung gebildet werden.

5. Vorrichtung gemäß Anspruch 3 oder 4, worin die Speichermittel (20) die aus dem Sendesignal extrahierten digitalen Daten speichern.

6. Vorrichtung gemäß einem der vorhergehenden Ansprüche, enthaltend einen Fernsehempfänger oder Monitor (24).

7. Vorrichtung gemäß Anspruch 6, enthaltend eine Kommunikationsverbindung (32), die mit den Extraktionsmitteln (12) verbunden ist, um eine Übertragung der Videosignale aus dem gemischten Sendesignal zur kontinuierlichen Anzeige durch den Fernsehempfänger oder Monitor zu gestatten.

8. Vorrichtung gemäß Anspruch 6 oder 7, enthaltend Mittel (29), die es gestatten, Videosignale aus dem gemischten Sendesignal und extrahierte digitale Daten entsprechend einem sachbezogenen Gegenstand, der durch die empfangseitige Partei ausgewählt wird, durch den Fernsehempfänger oder Monitor (24) gleichzeitig anzuzeigen.

9. Vorrichtung gemäß Anspruch 6, 7 oder 8, enthaltend einen Tuner, der die Anzeige der Videoinformation durch den Fernsehempfänger oder Monitor (24) von einem anderen Fernseh-Sendekanal ermöglicht als den Kanal, von dem die digitalen Daten extrahiert werden.

## Revendications

1. Appareil de saisie de données numériques utilisé par une partie réception et fonctionnant en combinaison avec un récepteur TV ou un moniteur (24), comprenant des moyens de réception (14) associés au récepteur TV ou au moniteur (24) pour recevoir un signal de composite diffusé comportant des données numériques, des moyens d'extraction (12) permettant à la partie réception d'extraire les données numériques du signal composite diffusé, un microprocesseur (16) pour contrôler l'extraction des données numériques du signal composite diffusé, un convertisseur (22) pour convertir les données numériques extraites en signaux vidéo convenables pour être affichés sur l'écran du récepteur TV ou du moniteur (24), et des moyens d'entrée (26) pour permettre à la partie réception d'interfacer avec le microprocesseur (16), caractérisé par des moyens supplémentaires permettant à la partie réception de saisir pour affichage sur le récepteur TV ou le moniteur (24) des informations numériques correspondant à une pluralité de sujets sans relation les uns aux autres, n'ayant pas d'ordre prédéterminé ou d'élément commun, où les données numériques correspondant à la pluralité de sujets ne nécessitent pas la répétition de la transmission des informations et peuvent être extraites à partir d'un seul balayage des informations du signal composite diffusé et peuvent être emmagasinées de façon permanente, lesdits moyens supplémentaires comprenant des moyens pour sélectionner arbitrairement des données numériques correspondant à la pluralité de sujets sans relation les uns aux autres sélectionnés par la partie réception, des moyens dans les moyens d'extraction (12) pour extraire des données numériques du signal composite diffusé correspondant à une pluralité de sujets sélectionnés arbitrairement et ordonnés aléatoirement durant un seul balayage du signal composite diffusé, des moyens d'emmagasinage permanent (18) pour emmagasiner de façon permanente les données numériques extraites pendant un intervalle de temps déterminé par la partie réception, et des moyens de mémoire (20) communiquant avec le microprocesseur (16) et emmagasinant des programmes, de sorte que le microprocesseur n'ait pas besoin de connaissance d'ordinateur ou de programmation par la partie réception.

2. Appareil selon la revendication 1, dans lequel le signal diffusé est un signal numérique-vidéo composite.

3. Appareil selon la revendication 1 ou 2, dans lequel le microprocesseur (16) est un microprocesseur affecté ne nécessitant pas de programmation par la partie réception.

4. Appareil selon la revendication 3, dans lequel les moyens d'entrée comprennent un dispositif de commande éloigné (26).

5. Appareil selon la revendication 3 ou 4, dans lequel les moyens de mémoire (20) emmagasinent des données numériques extraites du signal diffusé.

6. Appareil selon l'une des revendications précédentes, comprenant un récepteur TV ou un moniteur (24).

7. Appareil selon la revendication 6, comprenant une liaison de communication (32) connectée aux moyens d'extraction (12) pour permettre la transmission de signaux vidéo à partir du signal composite diffusé à afficher de façon continue sur le récepteur TV ou le moniteur.

8. Appareil selon la revendication 6 ou 7, comprenant des moyens (29) permettant aux signaux vidéo tirés du signal composite diffusé et des données numériques extraites correspondant à un sujet sélectionné par la partie réception d'être affichés simultanément sur le récepteur TV ou le moniteur (24).

9. Appareil selon la revendication 6, 7 ou 8, comprenant un syntonisateur permettant l'affichage des informations vidéo sur le récepteur TV ou le moniteur (24) à partir d'un canal de diffusion autre que le canal à partir duquel les données numériques sont extraites.
